Europäisches Patentamt

European Patent Office

Office européen des brevets

(11) Veröffentlichungsnummer: **0 289 006**
**B1**

# EUROPÄISCHE PATENTSCHRIFT

(45) Veröffentlichungstag der Patentschrift:
**28.11.90**

(51) Int. Cl.⁵: **B23K 35/22,** C23C 28/00

(21) Anmeldenummer: **88106769.8**

(22) Anmeldetag: **27.04.88**

(54) **Lotabweisende Beschichtung für Werkzeuge.**

(30) Priorität: **29.04.87 DE 3714339**

(43) Veröffentlichungstag der Anmeldung:
**02.11.88 Patentblatt 88/44**

(45) Bekanntmachung des Hinweises auf die Patenterteilung:
**28.11.90 Patentblatt 90/48**

(84) Benannte Vertragsstaaten:
**AT BE CH DE ES FR GB GR IT LI LU NL SE**

(56) Entgegenhaltungen:
**EP-A- 0 170 359**
**EP-A- 0 206 121**
**DE-A- 1 446 741**
**FR-A- 2 172 236**
**FR-A- 2 321 533**
**GB-A- 2 130 253**
**US-A- 2 740 193**
**US-A- 4 204 886**
**US-A- 4 420 110**

(73) Patentinhaber: **Siemens Aktiengesellschaft,
Wittelsbacherplatz 2, D-8000 München 2(DE)**

(72) Erfinder: **Freller, Helmut, Steinbergstrasse 34A,
D-8505 Roethenbach(DE)**
Erfinder: **Hörauf, Friedrich, Wilhelm-Marx-Strasse 26,
D-8500 Nürnberg(DE)**
Erfinder: **Lorenz, Hans Peter, Dr., Hubertusstrasse 13,
D-8501 Schwarzenbruck(DE)**
Erfinder: **Schack, Peter, Schnieglinger Strasse 33,
D-8500 Nürnberg(DE)**

## Beschreibung

Die Erfindung bezieht sich auf eine lotabweisende Beschichtung für Werkzeuge, insbesondere für Greif-, Einsetz- und/oder Biegewerkzeuge bei Bestückautomaten für elektrische Bauelemente, welche als Schichtbasis wenigstens eine Nitrid-Schicht aufweist.

Beim automatischen Bestücken von Leiterplatten mit radialen, axialen Bauelementen oder auch DIP-Bauelementen werden die verzinnten Anschlußdrähte bzw. Anschlußfahnen nach dem Einstecken der Bauelemente in die Bestückposition gebogen. Dabei treten an den Greif-, Einsetz- und/oder Biegewerkzeugen Lotanlagerungen auf, die den Betrieb der Bestückautomaten beeinträchtigen und zu Störungen im Fertigungsablauf führen können. Je nach Art der Bauelemente und des für die Verzinnung der Anschlüsse verwendeten Lotes werden erfahrungsgemäß Bestückungsstörungen bereits nach 1 x 10⁴ bis 5 x 10⁴ Bauelementen festgestellt.

Bisher werden bei Bestückungsstörungen die Werkzeuge vom angelagerten Lot befreit, was durch Auskratzen oder auch Nacharbeit der Bestückwerkzeuge erfolgen muß. Mit einer derartigen Instandhaltung und der damit verbundenen Stillstandzeit des Bestückautomaten ist ein nicht unerheblicher betriebswirtschaftlicher Aufwand verbunden.

Aufgabe der Erfindung ist es daher, durch eine lotabweisende Beschichtung die Werkzeuge so zu verbessern, daß ohne zusätzliche Instandhaltung höhere Bestückmengen erreicht werden.

Die Aufgabe ist erfindungsgemäß durch eine lotabweisende Beschichtung auf Metall-Nitrid-Basis gelöst, bei der neben der durch einen Beschichtungsvorgang erzeugten Metall-Nitrid-Grundschicht wenigstens eine zweite Schicht als Deckschicht mit Festschmierstoffeigenschaften vorhanden ist. Vorzugsweise weist die Grundschicht eine graduelle Änderung von hoher Dichte im Grenzbereich zum Grundwerkstoff des Werkzeuges zu einer porösen, rauhen Struktur an der Grenzfläche zur Deckschicht auf. Zweckmäßigerweise ist dabei die Metall-Nitrid-Schicht das bekannte Titan-Nitrid.

Die Erfindung geht von der Tatsache aus, daß die im Maschinenbau an sich bekannte Beschichtung von Werkzeugen mit Hartstoffschichten, insbesondere aus Titan-Nitrid, auch eine bessere Widerstandsfähigkeit gegen geschmolzenes Lot gewährleistet. Experimentelle Untersuchungen zeigten allerdings, daß derartige Hartstoffschichten speziell für den bestimmungsgemäßen Zweck noch nicht hinreichend verwendbar waren. Erst wenn auf derartigen Hartstoffschichten eine Deckschicht mit Festschmierstoffeigenschaften aufgebracht ist, ist die Beschichtung für den bestimmungsgemäßen Zweck einsetzbar. Dabei wird ausgenutzt, daß sich das Titan-Nitrid einerseits mit einer Struktur hoher Dichte, die auf dem Grundwerkstoff gut haftet, und andererseits mit einer porösen Struktur herstellen läßt, wobei die poröse Schicht und die damit verbundene Mikrorauhigkeit zur Verankerung und als Depot für den Festschmierstoff dient.

Für die Deckschicht mit den Festschmierstoffeigenschaften kommen sowohl organische als auch anorganische Substanzen in Frage. Insbesondere hat sich als organische Substanz eine bekannte Teflon-Suspension bewährt, die durch Tauchen oder Aufsprühen und nachfolgendes Einbrennen als Deckschicht herstellbar ist. Daneben können als anorganische Substanz beispielsweise der bekannte Festschmierstoff Molybdänsulfid in einer Silbermatrix oder Metall-Kohlenstoff-Kombinationen, wie beispielsweise Silber-Graphit, Zirkon-Kohlenstoff, Eisen-Nickel-Kohlenstoff oder auch Eisen-Nickel-Chrom-Kohlenstoff verwendet werden.

Letztere Substanzen sind in der Technik wegen ihrer guten trilologischen Eigenschaften bekannt und üblicherweise als Festschmierstoffe eingesetzt. Bei der Erfindung wird nun vorteilhafterweise ausgenutzt, daß in der Deckschicht der weichere Festschmierstoff in der harten Grundschicht durch deren Mikrorauhigkeit hinreichend stark verankert ist. In dieser Kombination ergeben sich überraschend gute und langanhaltende lotabweisende Eigenschaften eines derartigen Schichtaufbaus. Selbst bei partiellem Abrieb im Bereich der Spitzen und nach einer Einebenung der Oberfläche bleibt genügend Festschmierstoff als Depot in den Senken und erhält somit die lotabweisende Funktion aufrecht.

Weitere Einzelheiten und Vorteile der Erfindung ergeben sich aus der Beschreibung von Beispielen, wobei auf die Figuren der Zeichnung Bezug genommen wird.

Es zeigen

Figur 1 in schematischer Darstellung einen exemplarischen Schichtaufbau und

Figur 2 eine graphische Darstellung der Abhängigkeit der Porosität von der Wahl der Beschichtungsparameter.

In der Figur ist mit 1 der Grundwerkstoff eines Werkzeuges bezeichnet, auf dem eine Deckschicht 10 aufgebracht ist. Die Deckschicht besteht aus einer dichten TiN-Schicht 11 auf der Oberfläche des Werkzeuges, die gut haftet und die auf der dem Werkstück abgewandten Seite in eine poröse Schicht 12 übergeht. Der Übergang von der dichten TiN-Schicht 11 zur porösen, rauhen TiN-Schicht 12 kann - wie in der Figur angedeutet - definiert, oder aber vorteilhafterweise auch kontinuierlich erfolgen. Wichtig ist in jedem Fall, daß die TiN-Schicht 12 an der dem Grundwerkstoff 1 abgewandten Seite eine im Mikromaßstab zerklüftete und rauhe Oberfläche mit Erhebungen und Senken hat. Auf dieser Oberfläche befindet sich eine weitere Schicht 13 aus geeignetem Festschmierstoff, wobei deren Oberfläche eben ist.

Die Dicke d der Schicht 10 beträgt üblicherweise 5 bis 10 µm und sollte in jedem Fall kleiner als 15 µm sein. Davon entfallen etwa 2/3 auf Grundschicht 11, wobei die Mikrorauhigkeiten eine Tiefe von 1 bis 3 µm bei einem Kristallitdurchmesser von ca. 1 bis 2 µm haben.

Zur Herstellung derartiger Schichten werden übliche Verfahrenstechnologien - wie beispielsweise Niedertemperatur-Ionenplattieren oder Kathodenzerstäubung - verwendet, die im einzelnen von den speziellen Elementekombinationen der Beispiele abhängen:

Beispiel 1: Kombination TiN mit organischem Festschmierstoff

Poröse TiN-Schichten, die zur Aufnahme von Schmierstoffdepots geeignet sind, können alternativ durch reaktives Aufdampfen oder auch durch reaktives Aufstäuben hergestellt werden. Dies ist im einzelnen in der DE-A-33 00 668 (US-A-4 603 704) beschrieben.

Bei derartigen Verfahren lassen sich neben Art und Menge des Schichtmaterials als Parameter während des Beschichtungsvorganges weiterhin die relative Orientierung des Substrates gegenüber den auftreffenden Materialteilchen und das elektrische Potential am Substrat (sog. Bias-Spannung) ändern.

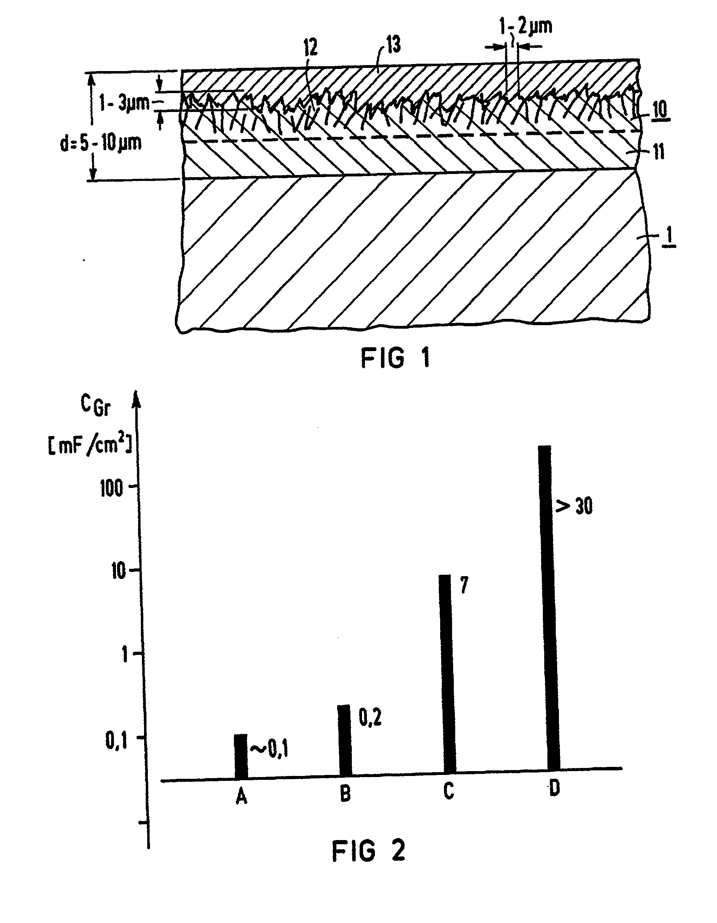

In Figur 2 ist der Beschichtungsvorgang verdeutlicht. Aufgetragen ist im logarithmischen Meßstab die Grenzflächenkapazität $C_{Gr}$ in mF/cm$^2$ als Maß für die Porosität der Schicht in Abhängigkeit von der Variation der Beschichtungsparameter: Im Bereich A wird das Substrat 1 aus Figur 1 parallel zum Target gestellt, so daß die Materialteilchen senkrecht auftreffen und eine Gegenspannung von etwa 100 V angelegt. Es ergibt sich eine sehr dichte Schicht mit guter Haftfestigkeit auf dem Substrat. Anschließend wird im Bereich B die Substratspannung weggenom men, wodurch sich die Dichte der Schicht verringert und damit die Porosität vergrößert. Im Bereich C wird das Substrat in einen Winkel zwischen 45 und 90° gegenüber den einfallenden Materialteilchen geneigt, wodurch sich die Porosität der Schicht weiter vergrößert. Schließlich wird im Bereich D das Target bewegt, so daß sich ständig wechselnde Einfallswinkel der Materialteilchen und damit statistische Unregelmäßigkeiten im Schichtaufbau mit weiterer Porositätsvergrößerung ergeben.

Durch die angegebenen Änderungen der Beschichtungsparameter läßt sich die Dichte der Schicht zwischen 100 und 50 % variieren. Bei entsprechender Verfahrensführung ist es jeweils möglich, einen kontinuierlichen Übergang von einer dichten Grundschicht, die fest am Grundwerkstoff des Werkzeuges haftet, zu einer porösen Oberflächenschicht in einem einzigen Beschichtungsvorgang durch zeitliche Variation der Beschichtungsparameter zu erzeugen.

Auf eine derartige Schicht werden handelsübliche Teflonsuspensionen beispielsweise aufgesprüht oder durch Tauchen in Flüssigkeit aufgebracht und anschließend gebrannt. Dadurch wird eine besonders abriebfeste Schicht gebildet, in der das Teflon in eine Kunstharzmatrix eingebettet ist.

Beispiel 2: Kombination TiN mit Molybdänsulfid als anorganischem Festschmierstoff

Die TiN-Schicht wird wie bei Beispiel 1 hergestellt. Auf die zerklüftete Oberfläche soll Molybdänsulfid aufgebracht werden. Das Molybdänsulfid liegt mit 5 % in einer Silber-Matrix vor, wobei das Silber wesentlich zur guten Haftung an der TiN-Struktur beiträgt. Die Herstellung dieser Deckschicht mit Schmierstoffeinlagerungen kann durch Kathodenzerstäubung erfolgen.

Beispiel 3: Kombination TiN mit Graphit in anorganischem Festschmierstoff

Entsprechend Beispiel 2 wird auf eine TiN-Grundschicht Graphit aufgebracht, wobei der Graphit mit 5 bis 10 % in einer Silber-Matrix vorliegt.

Beispiel 4: Kombination TiN mit Metall-Kohlenstoff als anorganischem Festschmierstoff

Auf die TiN-Schicht soll amorpher Kohlenstoff als Festschmierstoff aufgebracht werden. Dabei besteht die Möglichkeit, die Schichten mit Kohlenstoffanteil aus einer metallischen Grundschicht aufzubauen, bei der der Metallgehalt mit zunehmender Schichtdicke zurückgeht und bei der an der Oberfläche überwiegend Kohlenstoff vorliegt. Ein solcher Schichtaufbau bewirkt über die metallische Grundschicht wiederum eine gute Haftung zu den metallischen Substraten.

Speziell eine Deckschicht nach Beispiel 3 wird durch Kathodenzerstäubung aufgebracht. Im Verlauf des Beschichtungsvorganges wird beispielsweise Acethylen in die Verdampfungsanlage eingelassen. Durch den Kohlenstoffbelag, der sich auf der Kathode aufbaut, geht der abgestäubte Metallanteil immer mehr zurück, wobei sich die Abhängigkeit des Metallanteils in der Schicht vom Gaspartialdruck einstellen läßt. Als Trägermetall kommen dabei Zirkon (Zr) oder Eisen-Nickel (FeNi) oder auch Eisen-Nickel-Chrom (FeNiCr = V2A-Stahl) in Frage.

Mit den in den Beispielen 1 bis 4 beschriebenen Beschichtungen wurden Werkzeuge für Bestückautomaten versehen. Speziell an den als sogenannte "outside-former"-bezeichneten Biegewerkzeugen von Bestückautomaten, die besonders stark mit den beloteten Anschlußdrähten der Bauelemente in Berührung kommen, wurden Vergleichsversuche vorgenommen. Es zeigte sich, daß mit den erfindungsgemäßen Beschichtungen die Standzeit der Werkzeuge erheblich erhöht werden konnte. Aufgrund der lotanlagerungsverzögernden Wirkung der beschriebenen Beschichtungen wurde eine Steigerung der Bestückmengen um mehr als das 25fache erzielt. Damit wird ein erheblicher betriebswirtschaftlicher Gewinn beim Einsatz von Bestückautomaten erreicht.

**Patentansprüche**

1. Lotabweisende Beschichtung für Werkzeuge, insbesondere für Greif-, Einsetz- und Biegewerkzeuge bei Bestückautomaten für elektrische Bauelemente, welche als Schichtbasis wenigstens eine Metall-Nitrid-Schicht aufweist , **dadurch gekennzeichnet,** daß neben der durch einen Beschichtungsvorgang erzeugten Metall-Nitrid-Grundschicht wenigstens eine zweite Schicht als Deckschicht mit Festschmierstoffeigenschaften vorhanden ist.

2. Beschichtung nach Anspruch 1 , **dadurch gekennzeichnet,** daß die Grundschicht eine graduelle Änderung von hoher Dichte im Grenzbereich zum Grundwerkstoff des Werkzeuges zu einer porösen, rauhen Struktur an der Grenzfläche zur Deckschicht aufweist.

3. Beschichtung nach Anspruch 2 , **dadurch gekennzeichnet,** daß die Änderung der Dichte der Grundschicht kontinuierlich erfolgt.

4. Beschichtung nach Anspruch 1 und Anspruch 2 , **dadurch gekennzeichnet,** daß die Metall-Nitrid-Schicht eine Titan-Stickstoff-Verbindung $(TiN_x)$, vorzugsweise Titan-Nitrid, ist.

5. Beschichtung nach Anspruch 1 , **dadurch gekennzeichnet,** daß die Deckschicht mit den Festschmierstoffeigenschaften eine organische Substanz ist.

6. Beschichtung nach Anspruch 5 , **dadurch gekennzeichnet,** daß die Deckschicht mit den Festschmierstoffeigenschaften eine eingebrannte Teflon-Suspension ist.

7. Beschichtung nach Anspruch 1 , **dadurch gekennzeichnet,** daß die Deckschicht mit den Festschmierstoffeigenschaften eine anorganische Substanz ist.

8. Beschichtung nach Anspruch 7 , **dadurch gekennzeichnet,** daß die Deckschicht mit den Festschmierstoffeigenschaften Silber-Molbdänsulfid $(Ag:MoS_2)$ ist.

9. Beschichtung nach Anspruch 1 , **dadurch gekennzeichnet,** daß die Deckschicht mit den Festschmierstoffeigenschaften eine Metall-Kohlenstoff-Kombination ist.

10. Beschichtung nach Anspruch 9 , **dadurch gekennzeichnet,** daß die Metall-Kohlenstoff-Kombination Silber-Graphit (Ag:C) ist.

11. Beschichtung nach Anspruch 9 , **dadurch gekennzeichnet,** daß die Metall-Kohlenstoff-Kombination Zirkon-Kohlenstoff (Zr:C) ist.

12. Beschichtung nach Anspruch 9 , **dadurch gekennzeichnet,** daß die Metall-Kohlenstoff-Kombination Eisen-Nickel-Kohlenstoff (FeNi:C) ist.

13. Beschichtung nach Anspruch 9, **dadurch gekennzeichnet,** daß die Metall-Kohlenstoff-Kombination Eisen-Nickel-Chrom-Kohlenstoff (FeNiCr:C) ist.

14. Beschichtung nach einem der vorhergehenden Ansprüche, **dadurch gekennzeichnet,** daß die Dicke (d) der Gesamtschicht kleiner als 15 µm ist, wobei die Grundschicht etwa 2/3 der Gesamtschichtdicke beträgt.

## Claims

1. Solder-repelling coating for tools, in particular for gripping, insertion and bending tools in automatic insertion machines for electrical components, having the following features:
   - on the base material of the tool there is at least one metal-nitride layer as a base layer and at least one second layer as a cover layer with solid-lubricant properties, wherein
   - the base layer has a gradual change from a high density in the boundary region with the base material of the tool to a porous rough structure on the boundary surface with the cover layer, and
   - the change in the density of the base layer is continuous.

2. Coating according to claim 1, characterised in that the metal-nitride-layer used as the base layer is a titanium-nitrogen-compound $(TiN_x)$, preferably titanium nitride.

3. Coating according to claim 1, characterised in that the cover layer with the solid lubricant properties is an organic substance.

4. Coating according to claim 3, characterised in that the cover layer with the solid lubricant properties is a fired-on teflon suspension.

5. Coating according to claim 1, characterised in that the cover layer with the solid lubricant properties is an inorganic substance.

6. Coating according to claim 5, characterised in that the cover layer with the solid lubricant properties is silver molybdenum sulphide $(Ag:MoS_2)$.

7. Coating according to claim 1, characterised in that the cover layer with the solid-lubricant properties is a metal-carbon combination.

8. Coating according to claim 7, characterised in that the metal-carbon combination is silver graphite (Ag:C).

9. Coating according to claim 7, characterised in that the metal carbon combination is zirconium carbon (Zr:C).

10. Coating according to claim 7, characterised in that the metal-carbon-combination is iron-nickel-carbon (FeNi:C).

11. Coating according to claim 7, characterised in that the metal-carbon-combination is iron-nickel-chromium-carbon (FeNiCr:C).

12. Coating according to one of the preceding claims, characterised in that the thickness (d) of the overall layer is less than 15 µm, the base layer being about 2/3 of the overall layer thickness.

## Revendications

1. Revêtement anti-soudure pour outils, notamment pour des outils de préhension, de montage et de cintrage, dans des machines automatiques à implanter des composants électriques, ayant les caractéristiques suivantes:
   - sur le matériau de base de l'outil, est prévue au moins une couche de nitrure métallique comme substrat de couche et au moins une seconde couche comme couche de finition ayant des propriétés de lubrifiant solide,
   - le substrat de couche présentant une modification progressive de densité élevée dans la région adjacente au matériau de base de l'outil, à une texture poreuse et rugueuse à l'interface avec la couche de finition, et

– la variation de la densité du substrat de couche s'effectuant d'une manière continue.

2. Revêtement suivant la revendication 1, caractérisé en ce que la couche de nitrure métallique constituée en substrat de couche est un composé de titane et d'azote ($TiN_x$), de préférence du nitrure de titane.

3. Revêtement suivant la revendication 1, caractérisé en ce que la couche de finition ayant des propriétés de lubrifiant solide est une substance organique.

4. Revêtement suivant la revendication 3, caractérisé en ce que la couche de finition ayant les propriétés de lubrifiant solide est une suspension cuite de téflon.

5. Revêtement suivant la revendication 1, caractérisé en ce que la couche de finition ayant les propriétés de lubrifiant solide est une substance minérale.

6. Revêtement suivant la revendication 5, caractérisé en ce que la couche de finition ayant les propriétés de lubrifiant solide est de l'argent-sulfure de molybdène ($Ag:MoS_2$).

7. Revêtement suivant la revendication 1, caractérisé en ce que la couche de finition ayant les propriétés de lubrifiant solide est une association de métal et de carbone.

8. Revêtement suivant la revendication 7, caractérisé en ce que l'association de métal et de carbone est de l'argent-graphite ($Ag:C$).

9. Revêtement suivant la revendication 7, caractérisé en ce que l'association métal-carbone est du zirconium-carbone ($Zr:C$).

10. Revêtement suivant la revendication 7, caractérisé en ce que l'association métal-carbone est du fer-nickel-carbone ($FeNi:C$).

11. Revêtement suivant la revendication 7, caractérisé en ce que l'association métal-carbone est du fer-nickel-chrome-carbone ($FeNiCr:C$).

12. Revêtement suivant l'une des revendications précédentes, caractérisé en ce que l'épaisseur (d) du revêtement entier est inférieure à 15 µm, le substrat de couche représentant environ les 2/3 de l'épaisseur totale du revêtement.

1 - 2 µm

12        13

1 - 3 µm

d = 5 - 10 µm

10

11

1

FIG 1

$C_{Gr}$

[mF/cm²]

100

10

1

0,1

> 30

7

0,2

~0,1

A        B        C        D

FIG 2